# EUROPÄISCHE PATENTSCHRIFT

(11) **EP 1 127 229 B1**
(45) Veröffentlichungstag und Bekanntmachung des Hinweises auf die Patenterteilung: **20.12.2006**
(21) Anmeldenummer: 00965812.1
(22) Anmeldetag: 05.09.2000
(51) Int. Cl.: F16F 15/08, H02K 5/24

(54) **ENTKOPPLUNGSVORRICHTUNG FÜR AKTUATOREN**
DECOUPLING DEVICES FOR ACTUATORS
DISPOSITIF DE DECOUPLAGE POUR ACTIONNEURS

(30) Priorität: 08.09.1999 DE 19942840
(43) Veröffentlichungstag der Anmeldung: 29.08.2001
(73) Patentinhaber: ROBERT BOSCH GMBH, 70442 Stuttgart (DE)
(72) Erfinder: RUPP, Bernhard, 75056 Sulzfeld (DE); KNOEPFEL, Gerd, 77815 Buehl (DE); BRASS, Otto, 77815 Buehl (DE)
(86) Internationale Anmeldenummer: PCT/DE2000/003045
(87) Internationale Veröffentlichungsnummer: WO 2001/018424

(56) Entgegenhaltungen:
- DE-A- 4 321 633
- DE-C- 605 203
- FR-A- 1 255 721
- FR-A- 2 732 524
- US-A- 2 881 995
- US-A- 3 746 894

## Beschreibung

### Stand der Technik

Die Erfindung geht aus von einer Entkopplungsvorrichtung für Aktuatoren nach der Gattung des Anspruchs 1.
Während eines Betriebes des Aktuators, insbesondere eines Elektromotors, der durch Entkopplungselemente über ein Entkopplungsgehäuse mit einem Funktionsgehäuse verbunden ist, entstehen bspw. in einer Hauptanregungsschwingungsrichtung des Aktuators tangentiale Drehschwingungen und Schwingungen in radialer und axialer Richtung. Dies bedeutet für eine Entkopplung zwischen Aktuator und dem Entkopplungsgehäuse, daß sie in tangentialer Richtung besonders weich und in axialer Richtung bzw. radialer Richtung deutlich steifer sein muß.
Es sind Entkopplungsvorrichtungen für Aktuatoren und Elektromotoren bekannt, jedoch sind diese relativ starr.
Laufgeräusche des Elektromotors und laufbedingte, z. B. durch Unwucht eines Gebläserads erzeugte Schwingungen eines Gebläses, das bspw. an dem Elektromotor angeschlossen ist, übertragen sich dadurch noch in hohem Maße auf ein Gebläsegehäuse und führen zu einer unerwünschten Lärmentwicklung.
Bei elastischen Entkopplungselementen, die einerseits den Aktuator oder den Elektromotor an Stützbereichen halten und andererseits für eine Dämpfung sorgen sollen, führen diese einander entgegengerichteten Forderungen dazu, daß die Entkopplungselemente vorgespannt werden. Da die Dämpfung der Schwingungen durch Walkarbeit in den Entkopplungselementen erfolgt, ist keine optimale Entkopplung möglich.
Auch werden die Entkopplungselemente mit ihrer Eigenfrequenz so eingestellt, daß eine Eigenfrequenz des Entkopplungselements deutlich außerhalb einer Eigenfrequenz des Aktuators liegt. So kann die Dämpfung zum Teil erhöht werden.
Aus der gattungsgemäßen EP 0 682 396 A2 ist bekannt, daß elastische Kugeln, vorzugsweise aus einem Elastomer, verwendet werden, um zwei Bauteile gegeneinander zu entkoppeln. Dabei sind die Kugeln in je einer ellipsoidalen Mulde untergebracht, so daß den Kugeln ein gewisses Maß an freier Rotationsbewegung ermöglicht wird. Jedes Bauteil hat solche Mulden, die in dem jeweiligen Bauteil so angebracht sind, daß sich die Mulden der zwei Bauteile im eingebauten Zustand gegenüberliegen.
Die Mulden sind in einem Steg untergebracht.
Die Anordnung benötigt aber ein zentrales Halteelement und zur Dämpfung noch ein weiteres elastisches Element, das um eine Längsachse angeordnet ist.

### Vorteile der Erfindung

Die erfindungsgemäße Entkopplungsvorrichtung mit den kennzeichnenden Merkmalen des Anspruchs 1 hat demgegenüber den Vorteil, daß auf einfache Art und Weise eine fast ideale Entkopplung aller auftretenden Schwingungen des Aktuators erzielt wird.

Durch die in den abhängigen Ansprüchen aufgeführten Maßnahmen sind vorteilhafte Weiterbildungen und Verbesserungen der im Anspruch 1 angegebenen Entkopplungsvorrichtung möglich.

Vorteilhaft ist die Anordnung von Entkopplungselementen in der Form eines "Schrägkugellagers", da dadurch hohe Kräfte aufgenommen und Schwingungen in tangentialer Richtung gedämpft werden können. Schwingungen in radialer und axialer Richtung werden durch elastisches Zusammendrücken der Kugeln gedämpft. Die Entkopplungselemente werden in sämtlichen Belastungsrichtungen des Systems nur auf Druck beansprucht. Dies bedeutet eine gute Schüttelstandfestigkeit.

Besonders vorteilhaft als Entkopplungselemente sind Wälzkörper in Form von Kugeln aus einem Elastomer die durch einen Steg miteinander verbunden sind, der in einen Schlitz eines Halteelements eingeführt ist. So können die Entkopplungselemente sehr leicht gehalten und eingebaut werden.

Weiterhin vorteilhaft ist es, Vertiefungen, die die Anlageschultern für die Entkopplungselemente bilden, kreisbogenförmig zu gestalten.

Vorteilhaft ist es auch, die Entkopplungselemente gleichmäßig in Umfangsrichtung zu verteilen.

### Zeichnung

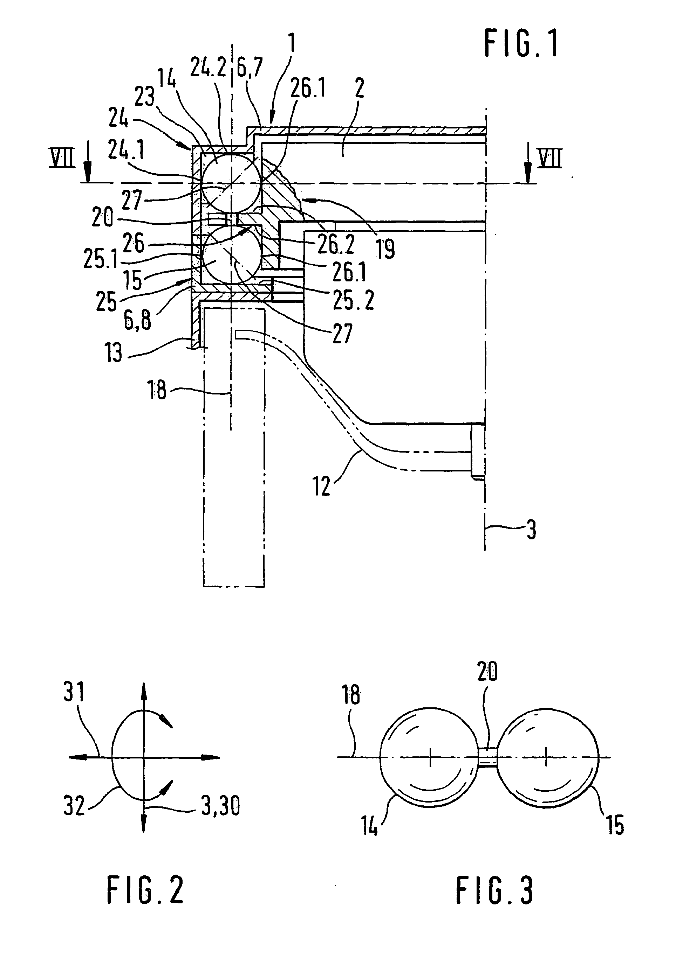

Ausführungsbeispiele der Erfindung sind in der Zeichnung vereinfacht dargestellt und in der nachfolgenden Beschreibung näher erläutert.
Es zeigen Fig. 1 einen Schnitt durch einen Aktuator mit einer Entkopplungsvorrichtung,
Fig. 2 eine schematische Darstellung vorhandener Beanspruchungsrichtungen,
Fig. 3 ein Ausführungsbeispiel von Entkopplungselementen,
Fig. 4 a-c ein erstes Teil eines Entkopplungsgehäuses,
Fig. 5 a,b ein Halteelement,
Fig. 6 a-c ein zweites Teil eines Entkopplungsgehäuses,
Fig. 7 einen Schnitt entlang der Linie VII-VII in Fig. 1,
Fig. 8 a-c ein weiteres Ausführungsbeispiel einer Entkopplungsvorrichtung und eines Entkopplungselements,
Fig. 9 ein weiteres Ausführungsbeispiel eines Entkopplungsgehäuses,
Fig. 10 ein weiteres Ausführungsbeispiel für ein Halteelement und ein Entkopplungsgehäuse,
Fig. 11 eine weitere Anordnungsmöglichkeit von Halteelement und Entkopplungsgehäuse,
Fig. 12 eine weitere Gestaltungsmöglichkeit von Anlageschultern in einem Entkopplungsgehäuse und einem Halteelement.

### Beschreibung der Ausführungsbeispiele

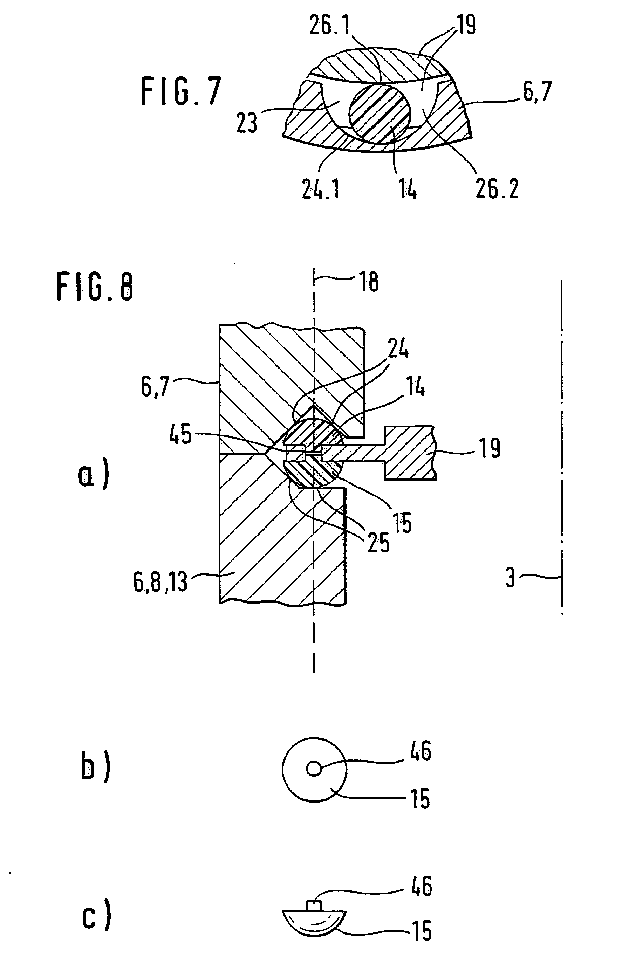

Figur 1 zeigt einen Schnitt durch eine Entkopplungsvorrichtung 1 mit einem Aktuator 2. Diese Anordnung von Entkopplungsvorrichtung 1 und Aktuator 2, bspw. ein Elektromotor 2, hat eine Längsachse 3. Die Entkopplungsvorrichtung 1 besteht aus einem Entkopplungsgehäuse 6, das bspw. aus zwei bspw. ringförmigen Teilen 7, einem Oberteil, und 8, einem Basisteil zusammengebaut wird. An das Entkopplungsgehäuse 6 schließt sich ein Funktionsgehäuse 13, bspw. ein Gebläsegehäuse 13 an, das ein vom Elektromotor angetriebenes Gebläse 12 umschließt. Das Basisteil 8 des Entkopplungsgehäuses 6 kann bspw. auch Teil des Funktionsgehäuses 13 sein. Das Entkopplungsgehäuse 6 wird dann durch die Gehäuseteile 7 und 13 gebildet.
Die Entkopplungsvorrichtung 1 setzt sich weiterhin aus elastischen Entkopplungselementen 14, 15 und einem Halteelement 19, hier bspw. in Ringform, zusammen. Die Entkopplungselemente 14, 15 sind hier bspw. Wälzkörper, die hier bspw. in Kugelform ausgebildet sind und sind bspw. aus einem Elastomer.
Die Entkopplungselemente 14, 15 sind hier bspw. paarweise entlang einer Linie 18, die parallel zur Längsachse 3 verläuft, übereinander angeordnet. Der Aktuator 2 ist zumindest indirekt mit dem Halteelement 19 verbunden.
Die Entkopplungselemente 14,15 sind bspw. durch einen Steg 20 miteinander verbunden. Eine parallel zur Linie 18 verlaufende Längsachse des Stegs 20 verläuft im eingebauten Zustand der Entkopplungsvorrichtung 1 parallel zur Längsachse 3. Durch den Steg 20 können die beiden Entkopplungselemente 14, 15 zusammen sehr leicht gehalten und mit dem Halteelement 19 in einem zusammen eingebaut werden.
In beiden Entkopplungsgehäusehälften 7, 8,13 befinden sich zur Längsachse 3 hin geöffnet im äußeren radialen Randbereich Vertiefungen 23, welche Anlageschultern 24, 25 im Oberteil 7 bzw. Basisteil 8,13 des Entkopplungsgehäuse für die Entkopplungselemente 14, 15 bilden. Das innerhalb des Entkopplungsgehäuses 6,7,8,13 liegende Halteelement 19 stellt zu den Anlageschultern 24, 25 gegenüberliegende Anlageschultern 26 zur Verfügung.
Die Anlageschultern 24-26 haben Abschnitte, die in radialer Richtung ausgebildet sind, und als radiale Anlageschultern 24.2, 25.2, 26.2 bezeichnet werden. Hier greifen axiale Kräfte an. Die Anlageschultern 24-26 haben weiterhin Abschnitte, die in axialer Richtung ausgebildet sind, und als axiale Anlageschultern 24.1, 25.1, 26.1 bezeichnet werden. Dort greifen radiale Kräfte an. Axiale 24.1, 25.1, 26.1 und radiale 24.2, 25.2, 26.2 Anlageschultern stehen hier bspw. senkrecht zueinander.
Die Anlageschulter 24.1 ist die axiale Anlageschulter, weil sie nahezu parallel zur Längsachse 3 verläuft. Die Anlageschulter 24.2 bildet die radiale Anlageschulter, weil sie hier nahezu senkrecht zur Längsachse 3 verläuft.
Dadurch, daß die Entkopplungselemente 14,15 in den Vertiefungen 23 (Fig. 7) gehalten werden und durch den Steg 20 miteinander verbunden sind, ist es dem Halteelement 19 nicht möglich, sich ganz um die Längsachse 3 zu drehen.
Die Anlageschultern 24-26 sind dabei so ausgebildet, daß bei einer relativen Verdrehung des Halteelements 19 gegenüber dem Entkopplungsgehäuse 6,7,8,13 die Entkopplungselemente 14,15 um eine Drehachse 27 abrollen, die schräg zur Längsachse 3 verläuft. Dies entspricht vom Prinzip her der Anordnung eines zweireihigen Schrägkugellagers. Zur Aufnahme von Axialkräften in beiden Richtungen sind die Entkopplungselemente 14, 15 entgegengesetzt angeordnet. In der Kugellagerterminologie spricht man von X- oder O-Anordnung.

Figur 2 zeigt die Schwingungsrichtungen in axialer 30, radialer 31 und tangentialer 32 Richtung, die auftreten, wenn der Aktuator 2 in Betrieb ist. Diese Schwingungen des Aktuators 2 soll die Entkopplungsvorrichtung 1 bspw. von dem Gebläsegehäuse 13 entkoppeln.

Figur 3 zeigt wie zwei bspw. im Querschnitt runde Entkopplungselemente 14, 15 durch den Steg 20 bspw. miteinander verbunden sind. Der Querschnitt des Stegs 20 senkrecht zur Linie 18 kann viereckig oder auch bspw. rund sein.

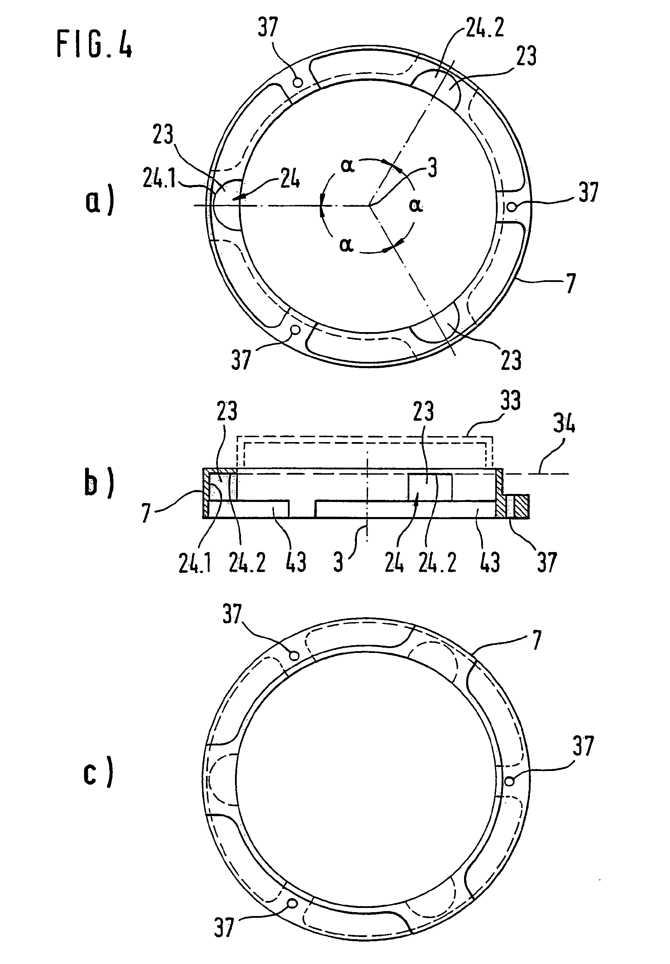

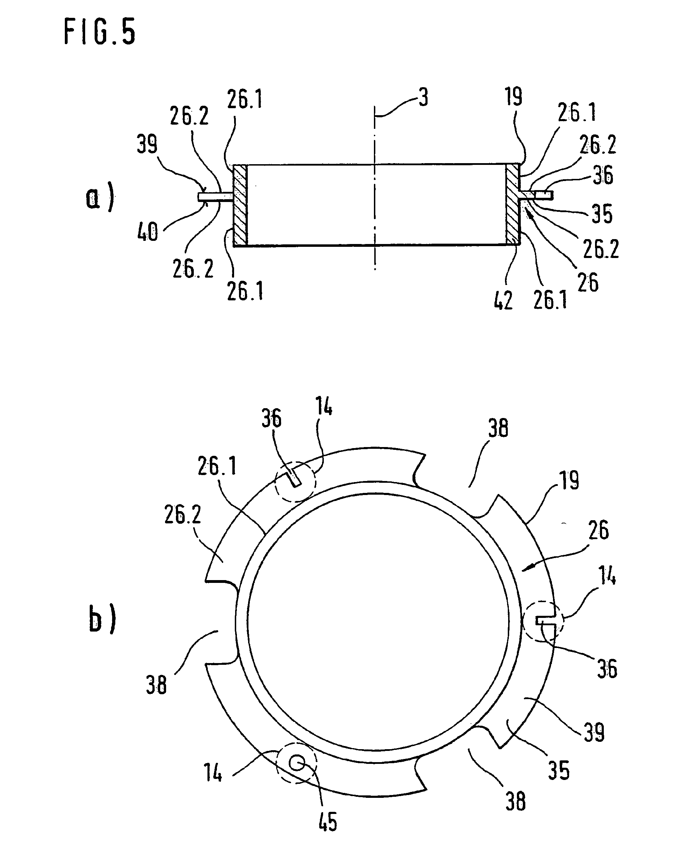

Figur 4 zeigt das Oberteil 7 des Entkopplungsgehäuses 6 aus Figur 1 in Unter- und Draufsicht (Fig. 4 a, c) und einen Querschnitt in Figur 4b.
Das Oberteil 7 hat bspw. eine runde ringartige Querschnittskontur. Jede andere Querschnittskontur ist auch denkbar, wie zum Beispiel eine quadratische Querschnittskontur. Das Oberteil 7 kann auch topfartig 33 ausgebildet sein, wie in Figur 4b gestrichelt gezeichnet angedeutet. In dem Oberteil 7 befinden sich hier bspw. drei Vertiefungen 23, die die Anlageschultern 24.1, 24.2 für die Entkopplungselemente 14 bilden. In Figur 4a sind von den Vertiefungen 23 aus Mittellinien zu der zur Zeichnungsebene senkrecht verlaufenden Längsachse 3 gezeichnet. Daran ist zu erkennen, daß in Umfangsrichtung benachbarte Vertiefungen 23 und Entkopplungselemente 14, die sich in den Vertiefungen 23 befinden, bspw. jeweils einen gleich großen Winkel α zueinander einschließen. In Figur 7 wird ein Schnitt VII-VII in Figur 1 gezeigt, der die Vertiefung 23 deutlicher zeigt.
Im eingebauten Zustand liegen die Entkopplungselemente 14, 15 an den Anlageschultern 24.1, 24.2, 25.1, 25.2 an.
In Figur 4b ist eine zur Längsachse 3 senkrecht verlaufende Ebene 34 eingezeichnet, die durch die radiale Anlageschulter 24.2 verläuft. Die Vertiefungen 23 und damit die Entkopplungselemente 14 befinden sich dadurch bspw. in einer Ebene.
In einem äußeren Bereich des Oberteils 7 ist eine Bohrung 37 vorhanden, durch die bspw. eine Schraube geführt wird, um das Oberteil 7 mit dem Basisteil 8, 13 zu verbinden.
Im Bereich der Vertiefungen 23 sind im Oberteil 7 in Richtung zum Halteelement 19 hin, offene längliche Einkerbungen 43 vorgesehen, in die radiale Vorsprünge 35 (Fig. 5) des Halteelements 19 eingreifen.
Das Oberteil 7 des Entkopplungsgehäuses 1 ist aus Kunststoff, Metall oder Keramik.

Figur 5 zeigt das Halteelement 19, das bspw. ringförmig ausgebildet ist. Das Halteelement 19 ist hier bspw. der Querschnittskontur des Oberteils 7 des Entkopplungsgehäuses 6 aus Figur 4 angepaßt. Jede andere Querschnittskontur ist auch denkbar.
Das Halteelement 19 hat wenigstens einen radialen Vorsprung 35. Der radiale Vorsprung 35 ist bspw. an dem äußerem Rand des Halteelements 19 angeordnet. Dieser radiale Vorsprung 35 kann bspw. um das ganze Halteelement 19 herumlaufen. Er kann aber auch, wie in Figur 5b gezeigt, nur dort vorhanden sein, wo sich im eingebauten Zustand die Entkopplungselemente 14, 15, die hier zur Andeutung gestrichelt gezeichnet sind, befinden, um dort die Entkopplungselemente 14 von den Entkopplungselementen 15 zu trennen.
Falls zur Reduzierung der Anzahl von Bauteilen die Entkopplungselemente 14, 15 durch den Steg 20 miteinander verbunden sind, ist bspw. das Halteelement 19 mit einem Schlitz 36 in dem Vorsprung 35 versehen, in den der Steg 20 eingeschoben wird. Dies erleichtert die Montage. Die Schlitztiefe in den Vorsprung 35 muß zumindest so tief sein, daß die durch den Steg 20 verbundenen Entkopplungselemente 14, 15 so weit eingeschoben werden können, daß sie die Anlageschultern 26 des Halteelements 19 berühren.
Werden die Entkopplungselemente 14, 15 einzeln, ohne durch einen Steg 20 miteinander verbunden zu sein, eingebaut, so kann statt des Schlitzes eine Aussparung 45, bspw. ein axiales Loch 45, vorhanden sein, in der sich das Entkopplungselement 14, 15 zum Teil befindet, so daß es dem Halteelement 19 nicht möglich ist, sich ganz um die Längsachse 3 zu drehen.
Die Aussparungen 45, bspw. Löcher 45, in dem Halteelement 19 sind bspw. so gefertigt, daß sie im eingebauten Zustand von Entkopplungsgehäuse 6 und Halteelement 19 zentrisch zwischen den Entkopplungselementen 14, 15 liegen. Die Entkopplungselemente 14, hier gestrichelt gezeichnet, liegen dann in den Löchern 45. Ein Durchmesser der Löcher 45 sollte nicht so groß sein, daß sich die einander axial gegenüberliegenden Entkopplungselemente 14, 15 im eingebauten Zustand berühren. Der Durchmesser der Löcher 45 hängt dabei von der Dicke des Halteelements 19 an der Stelle des Lochs 45 ab.
Das Halteelement 19 hat je nach Anzahl der Entkopplungselemente 14, 15 die gleiche Anzahl von Aussparungen 45 bzw. Schlitzen 36. An dem Halteelement 19 können bspw. nur Schlitze 36 oder nur Aussparungen 45 vorgesehen sein. Auch jede Kombination aus Schlitz 36 und Aussparung 45 in dem Vorsprung 35 ist denkbar. Das Halteelement 19 hat radiale und axiale Anlageschultern 26.1, 26.2 für die Entkopplungselemente 14, 15, wobei an einer Vorderseite 39 und an einer Rückseite 40 jedes radialen Vorsprungs 35 je eine radiale Anlageschulter 26.1 und am Ringkörper 42 senkrecht dazu und durch den Vorsprung 35 getrennt je eine axiale Anlageschulter 26.2 ausgebildet ist.
Ein Ausschnitt 38 an dem Halteelement 19 befindet sich dort, wo im eingebauten Zustand bspw. eine Schraube verläuft, die die Gehäuseteile 7,8, 13 miteinander verbindet.
Das Halteelement 19 ist aus Kunststoff, Metall oder Keramik.

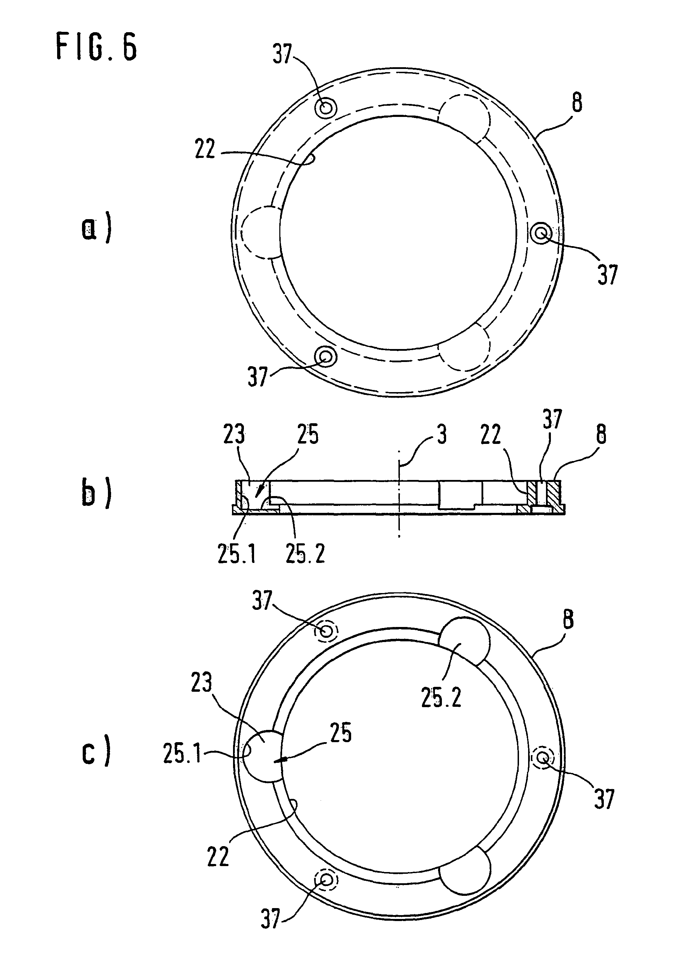

Figur 6 zeigt das Basisteil 8 des Entkopplungsgehäuses 6 in Unter- und Draufsicht (Fig. 6 a,c) und einen Querschnitt in Figur 6b.
Das Basisteil 8 hat bspw. eine ringartige Querschnittskontur. In diesem Basisteil 8 befinden sich hier bspw. drei Vertiefungen 23, die die Anlageschultern 25 für die Entkopplungselemente 15 bilden und zum Halteelement 19 hin zu einem Innenrand 22 des Basisteils 8 offen sind.
Die Vertiefungen 23 und damit die Entkopplungselemente 15 befinden sich bspw. in einer Ebene.
In einem äußeren Bereich des Basisteils 8 ist wenigstens eine Bohrung 37 vorhanden. Durch diese Bohrung 37 des Teils 8 und durch eine weitere Bohrung des Teils 7 wird bspw. eine Schraube geführt, um das Basisteil 8 mit dem Oberteil 7 zu verbinden. Die Vertiefungen 23 des Teils 8 liegen bspw. dann über den Vertiefungen 23 des Teils 7.
Das Basisteil 8 des Entkopplungsgehäuses 6 ist aus Kunststoff, Metall oder Keramik.

Bei der Montage werden die Teile 6,7, 19 und 6,8 bzw. 13 so montiert, daß die jeweiligen Vertiefungen 23 und die Schlitze 36 sich überdeckend übereinander liegen. Weitere Zentrierungselemente sind dabei nicht notwendig.

Figur 7 zeigt einen Schnitt entlang der Linie VII-VII in Figur 1. Die Anlageschulter 24 wird durch die Vertiefung 23 gebildet und ist derart, hier bspw. kreisbogenförmig, etwa in Form eines Halbkreises, gestaltet, daß bei Drehmomentabgabe des Elektromotors 2 als beispielhaftem Aktuator 2 und der damit verbundenen Rollbewegung die als Kugeln ausgebildeten Entkopplungselemente 14 elastisch zusammengedrückt werden und durch die elastische Verformung eine Rückstellkraft erzeugt wird. Die Gestaltung als kreisbogenförmige Vertiefung 23 bewirkt eine Progression der Rückstellkraft, da die Verformung der Entkopplungselemente 14, 15 progressiv zunimmt. Die elastische Verformung des Steges 20 bei dieser Bewegung spielt hier eine untergeordnete Rolle. Die Krümmung der kreisbogenförmigen Vertiefung 23 ist bspw. kleiner als die Krümmung der Entkopplungselemente 14. Die Vertiefung 23 kann bspw. auch ellipsenförmig ausgebildet sein. Dabei darf die größte Krümmung dieser Ellipsenform höchstens der Krümmung der Kugel 14 entsprechen.
Auch ist es vorstellbar, daß Entkopplungselement 14, 15 und Vertiefung 23 ellipsenförmig ausgebildet sind. Weitere Kombinationen bei der Gestaltung der Entkopplungselemente 14,15 in Form von Wälzkörpern und der Vertiefung 23 sind denkbar. Die Vertiefung 23 ist in radialer Richtung so gestaltet, daß sich das Halteelement 19 und das Gehäuse 6, 7 bei eingebautem Entkopplungselement 14 nicht berühren können. Es ist also ein ausreichend großer Spalt zwischen Gehäuse 6,7 und Anlageschulter 26.1 vorhanden.
Diese Ausführungen für Figur 7 gelten analog für einen parallelen Schnitt durch die Vertiefung 23 des Teils 8 in Figur 1.

Figur 8a-c zeigt ein weiteres Ausführungsbeispiel einer Entkopplungsvorrichtung 1 und von Entkopplungselementen 14, 15. Die Entkopplungselemente 14, 15 sind bspw. halbkugelförmig ausgebildet.
In Figur 8b ist eine Draufsicht auf ein Entkopplungselement 15 gemäß Figur 8a ohne Gehäuse 6,7,8,13 und Halteelement 19 gezeigt. Das Entkopplungselement 15 hat bspw. einen kreisförmigen radialen Querschnitt, bezogen auf die Linie 18, und ist mit einem Nippel 46 versehen. Der Nippel hat bspw. einen runden Querschnitt.

In Figur 8c ist das Entkopplungselement 15 gemäß Figur 8b in Seitenansicht gezeigt. Der axiale Querschnitt, bezogen auf die Linie 18, des Entkopplungselements 15 kann bspw. auch ellipsenförmig ausgebildet sein.
Die Nippel 46 der Entkopplungselemente 14, 15 ragen in das bspw. vorhandene Loch 45 des Halteelements 19, so daß es dem Halteelement 19 nicht möglich ist, sich ganz um die Längsachse 3 zu drehen. Eine Höhe der Nippel 46 der Entkopplungselemente 14,15 ist so ausgebildet, daß sich beide höchstens berühren. Die Entkopplungselemente 14, 15 können auch miteinander verbunden sein, bspw. dadurch, daß beide Nippel 46 einen gemeinsamen Steg 20 bilden. Diese Entkopplungselemente könnten dann in den Schlitz 36 des Halteelements 19 eingeführt sein.
Das Halteelement 19 hat bei diesem Ausführungsbeispiel der Entkopplungsvorrichtung 1 keine Anlageschultern, an dem sich die Entkopplungselemente 14,15 abrollen.

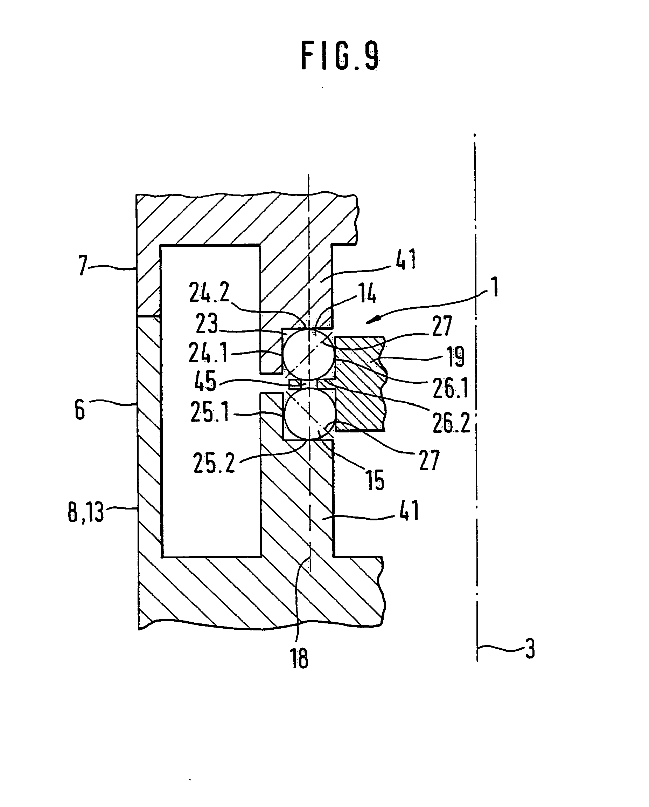

Figur 9 zeigt ein weiteres Ausführungsbeispiel des Entkopplungsgehäuses 6 bzw. Funktionsgehäuses 13. Da die gleichen Bezugszeichen wie in Figur 1 gelten, werden diese nicht nochmals erläutert. Die Entkopplungselemente 14, 15 sind bspw. paarweise, entlang einer Linie 18, die parallel zur Längsachse 3 verläuft, übereinander angeordnet. Der Unterschied dieser Ausführung zur Figur 1 besteht darin, daß die Vertiefungen 23 sich nicht am Rand eines Teils 7, 8, 13 des Entkopplungsgehäuses 6 befinden, sondern in einer Säule 41 untergebracht sind. Der Querschnitt der Säule 41 senkrecht zur Längsachse 3 durch eine Anlageschulter 24, 25 ergibt sich bspw. aus Figur 7. Eine zur Linie 18 parallel verlaufende Längsachse der Säule 41 verläuft hier bspw. parallel zur Längsachse 3. Die Höhen der Säulen 41 in dem Entkopplungsgehäuseteile 7 und 8 bzw. 13 sind so gewählt, daß die Entkopplungselemente 14, 15 im eingebauten Zustand an den jeweiligen axialen Anlageschultern 24.1, 25.1 anliegen. Die Säulen 41 der zwei Gehäuseteile 7,8,13 können sich auch berühren. Die Säule 41 kann in Längsrichtung gesehen auch über das Gehäuseteil 7, 8, 13 hinausragen. Es können auch bspw. die Vertiefungen im äußeren Gehäuseteil (Fig. 1) und die Vertiefungen in Säulen (Fig. 9) in einer Ausführung der Gehäuseteile 6,7,8, 13 vorhanden sein.

Es ist nicht zwingend notwendig, daß die Entkopplungselemente 14, 15 sich übereinander befinden. So können die Entkopplungsgehäuseteile 7 und 8 bzw. 13 mit den Vertiefungen 23, wie sie in der Figuren 1, 4 und 6 gezeigt sind, um jeden beliebigen Winkel um die Längsachse 3 verdreht sein. Eine Verbindung durch einen Steg 20 ist dann nicht mehr möglich. Es müssen dann, wie in Figur 5 erläutert, Aussparungen 45 an den entsprechenden Stellen, wo sich die Entkopplungselemente 14, 15 befinden, vorhanden sein.

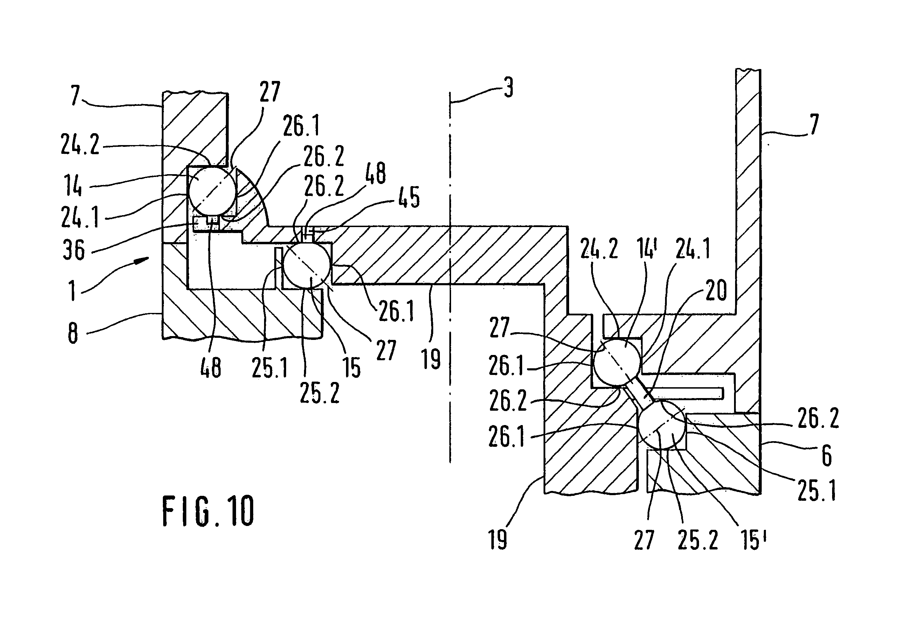

Figur 10 zeigt ein weiteres Ausführungsbeispiel für das Halteelement 19 und ein Entkopplungsgehäuseteil 7,8,13. Die Entkopplungselemente 14, 15 bzw. 14', 15'sind bspw. nicht übereinander angeordnet. Die Entkopplungselemente 14, 14' bzw. 15, 15' befinden sich nicht in einer zur Längsachse 3 senkrecht verlaufenden Ebene. Es können durch den Steg 20 miteinander verbundene Entkopplungselemente 14', 15' (rechte Hälfte der Figur 10) und andere Entkopplungselemente 14, 15 (linke Hälfte der Figur 10), die nicht durch einen Steg miteinander verbunden sind, in einer Ausführung der Entkopplungsvorrichtung 1 verwendet werden. Die Entkopplungselemente 14, 15 haben eine Noppe 48, die in eine Aussparung 45, bspw. ein Loch 45, bzw. einen Schlitz 36 hineinragen. Die Entkopplungselemente 14', 15' sind durch den Steg 20 miteinander verbunden, der im eingebauten Zustand der Entkopplungsvorrichtung 1 nicht parallel zur Längsachse 3 verläuft.

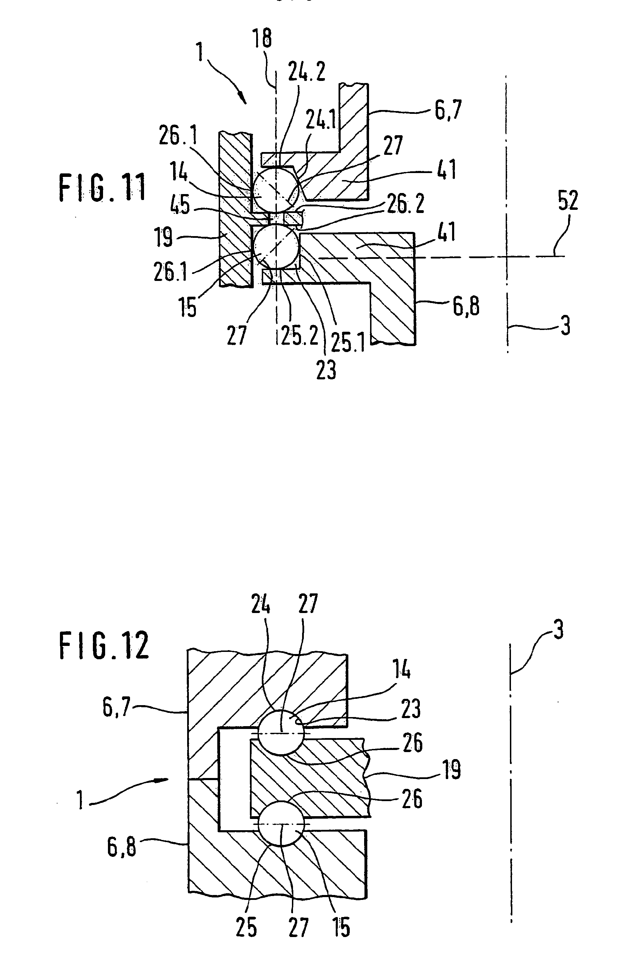

Figur 11 zeigt eine weitere Anordnungsmöglichkeit von Halteelement 19 und Entkopplungsgehäuse 6. Da die gleichen Bezugszeichen wie in Figur 1, 5 gelten, werden diese nicht nochmals erläutert.
Die Entkopplungselemente 14, 15 sind hier bspw. paarweise, entlang einer Linie 18, die parallel zur Längsachse 3 verläuft, übereinander angeordnet. Die Vertiefung 23 wird hier in der Säule 41 gebildet. Eine Längsachse 52 der Säule 41 verläuft hier bspw. senkrecht zur Längsachse 3. Die Längsachse 52 der Säule 41 kann auch unter einem anderem Winkel zur Längsachse 3 ausgebildet sein.
Das Halteelement 19 bildet hier die von der Längsachse 3 am weitesten entfernte axiale Anlageschulter 26.1. Eine Oberfläche der radialen Anlageschulter 24.1 verläuft bspw. nicht parallel zur Längsachse 3.

Figur 12 zeigt eine weitere Gestaltungsmöglichkeit von Anlageschultern 24 - 26 in dem Entkopplungsgehäuse 6,7,8,13 und dem Halteelement 19. Die Anlageschultern 24 - 26 sind hier so ausgebildet, daß die Drehachse 27 senkrecht zur Längsachse verläuft.
Der Krümmungsradius der Vertiefung 23 entspricht hier bspw. dem Krümmungsradius der Entkopplungselementel4, 15. Dadurch ist eine eindeutige Kennzeichnung von axialer und radialer Anlageschulter nicht möglich.

Es können auch in dem Entkopplungsgehäuseteil 7 bspw. vier Entkopplungselemente in einer oben schon beschriebenen Art und Weise untergebracht sein und in dem anderem Entkopplungsgehäuseteil 8,13 bspw. fünf Entkopplungselemente in einer oben schon beschriebenen Art und Weise untergebracht sein. Jede weitere Kombination je nach Höhe der Belastung ist denkbar.

## Patentansprüche

1. Entkopplungsvorrichtung (1) für einen Aktuator (2), insbesondere Elektromotor (2), mit einem ein- oder mehrteiligen Entkopplungsgehäuse (6,7,8), das mit einem Funktionsgehäuse (13) verbunden ist und den Aktuator (2) wenigstens zum Teil umschließt, und mit aus elastischem Material gebildeten Entkopplungselementen (14,15), wobei jedes Entkopplungselement (14,15) an Anlageschultern (24,25,26) anliegt, wobei eine erste Mehrzahl (14) von voneinander getrennten Entkoppelungselementen (14) vorhanden ist, die sich in einer zu einer Längsachse (3) der Entkopplungsvorrichtung (1) senkrecht verlaufenden ersten Ebene befindet, sowie mit einem Halteelement (19), an dem der Aktuator (2) angreift, **dadurch gekennzeichnet, daß** das Halteelement (19) zwischen der ersten Mehrzahl (14) von voneinander Entkoppelungselementen (14) und einer weiteren Mehrzahl von voneinander getrennten Entkoppelungselementen (15) liegt, und dass sich die weitere Mehrzahl von voneinander getrennten Entkoppelungselementen (15) in einer zur ersten Ebene parallel verlaufenden, zweiten Ebene befindet.

2. Entkopplungsvorrichtung nach Anspruch 1, **dadurch gekennzeichnet, daß** zumindest zwei Anlageschultern (24,25,26) für ein Entkopplungselement (14,15) von dem Entkopplungsgehäuse (6,7,8) oder dem Funktionsgehäuse (13) gebildet werden.

3. Entkopplungsvorrichtung nach Anspruch 2, **dadurch gekennzeichnet, daß** zwei Anlageschultern (24,25,26) für ein Entkopplungselement (14,15) von dem Halteelement (19) gebildet werden.

4. Entkopplungsvorrichtung nach Anspruch 2 oder 3, **dadurch gekennzeichnet, daß** die Entkopplungselemente (14,15) paarweise angeordnet sind.

5. Entkopplungsvorrichtung nach Anspruch 2, 3 oder 4, **dadurch gekennzeichnet, daß** das Halteelement (19) einen teilweise oder ganz umlaufenden radialen Vorsprung (35) hat, und daß das Halteelement (19) in seinem radialen Vorsprung (35) im Bereich der Entkopplungselemente (14,15) zumindest einen Schlitz (36) hat.

6. Entkopplungsvorrichtung nach Anspruch 5, **dadurch gekennzeichnet, daß** je ein Entkopplungselement (14) aus der ersten Mehrzahl von Entkopplungselementen mit einem Entkopplungselement (15) aus der Zweiten Mehrzahl von Entkopplungselementen durch einen Steg (20) verbunden ist.

7. Entkopplungsvorrichtung nach einem der Ansprüche 2 bis 4, **dadurch gekennzeichnet, daß** das Halteelement (19) einen teilweise oder ganz umlaufenden radialen Vorsprung (35) hat und daß das Halteelement (19) in seinem radialem Vorsprung (35) im Bereich der Entkopplungselemente (14,15) zumindest eine Aussparung (45) hat.

8. Entkopplungsvorrichtung nach einem oder mehreren der Ansprüche 2 bis 7, **dadurch gekennzeichnet, daß** in dem Entkopplungsgehäuse (6,7,8) bzw. in dem Funktionsgehäuse (13) die Anlageschultern (24,25,26) durch zumindest eine Vertiefung (23) in einem äußeren Bereich des Entkopplungsgehäuses (6,7,8) bzw. des Funktionsgehäuses (13) gebildet werden.

9. Entkopplungsvorrichtung nach einem oder mehreren der Ansprüche 2 bis 7, **dadurch gekennzeichnet, daß** zumindest eine Säule (41) vorhanden ist, in der durch eine Vertiefung (23) an einer Stirnseite der Säule (41) die Anlageschultern (24,25,26) gebildet werden.

10. Entkopplungsvorrichtung nach Anspruch 8 oder 9, **dadurch gekennzeichnet, daß** das Entkopplungsgehäuse (6,7,8) oder das Funktionsgehäuses (13) und das Halteelement (19) axiale und radiale Anlageschultern (24.1, 24.2) haben, und zumindest die axialen Anlageschultern (24.1) kreisbogenförmig ausgebildet sind, wobei die Krümmung der kreisbogenförmigen Anlageschultern (24,25,26) höchstens der Krümmung der Entkopplungselemente (14,15) entspricht.

11. Entkopplungsvorrichtung nach einem oder mehreren der vorherigen Ansprüche, **dadurch gekennzeichnet, daß** die Entkopplungsvorrichtung (1) eine Längsachse (3) hat und die Anlageschultern (24,25,26) für die Entkopplungselemente (14,15) so zueinander ausgebildet sind, daß eine Drehachse (27) der Entkopplungselemente (14,15) schräg zu der Längsachse (3) verläuft.

12. Entkopplungsvorrichtung nach einem oder mehreren der vorherigen Ansprüche , **dadurch gekennzeichnet, daß** die Entkopplungselemente (14,15) als Wälzkörper ausgebildet sind.

13. Entkopplungsvorrichtung nach Anspruch 12, **dadurch gekennzeichnet, daß** die Wälzkörper in Form von Kugeln ausgebildet sind.

14. Entkopplungsvorrichtung nach einem oder mehreren der vorherigen Ansprüche , **dadurch gekennzeichnet, daß** ein Winkel α zwischen in Umfangsrichtung benachbarten Entkopplungselementen (14,15) jeweils gleich groß ist.

15. Entkopplungsvorrichtung nach einem oder mehreren der vorherigen Ansprüche, **dadurch gekennzeichnet, daß** die Entkopplungselemente (14,15) auf einer zur Längsachse (3) parallel verlaufenden Linie (18) übereinander liegen.

## Claims

1. Decoupling device (1) for an actuator (2), particularly an electric motor (2), comprising a one- or multi-part decoupling housing (6, 7, 8) which is connected to a functional housing (13) and at least partially encloses the actuator (2), and with decoupling elements (14, 15) formed from elastic material, each decoupling element (14, 15) resting against seating shoulders (24, 25, 26), wherein there is a first plurality (14) of decoupling elements (14) separated from one another which is located in a first plane extending perpendicularly to a longitudinal axis (3) of the decoupling device (1), and with a holding element (19) which is engaged by the actuator (2), **characterized in that** the holding element (19) is located between the first plurality (14) of mutually separated decoupling elements (14) and a further plurality of mutually separated decoupling elements (15), and **in that** the further plurality of mutually separated decoupling elements (15) is located in a second plane extending in parallel to the first plane.

2. Decoupling device according to Claim 1, **characterized in that** at least two seating shoulders (24, 25, 26) for a decoupling element (14, 15) are formed by the decoupling housing (6, 7, 8) or the functional housing (13).

3. Decoupling device according to Claim 2, **characterized in that** two seating shoulders (24, 25, 26) for a decoupling element (14, 15) are formed by the holding element (19).

4. Decoupling device according to Claim 2 or 3, **characterized in that** the decoupling elements (14, 15) are arranged in pairs.

5. Decoupling device according to Claim 2, 3 or 4, **characterized in that** the holding element (19) has a partially or wholly continuous radial projection (35) and **in that** the holding element (19) has at least one slot (36) in its radial projection (35) in the area of the decoupling elements (14, 15).

6. Decoupling device according to Claim 5, **characterized in that** one decoupling element (14) each from the first plurality of decoupling elements is connected to a decoupling element (15) from the second plurality of decoupling elements by means of a web (20).

7. Decoupling device according to one of Claims 2 to 4, **characterized in that** the holding element (19) has a partially or wholly continuous radial projection (35) and **in that** the holding element (19) has at least one opening (45) in its radial projection (35) in the area of the decoupling elements (14, 15).

8. Decoupling device according to one or more of Claims 2 to 7, **characterized in that** in the decoupling housing (6, 7, 8) and in the functional housing (13), respectively, the seating shoulders (24, 25, 26) are formed by at least one recess (23) in an outer area of the decoupling housing (6, 7, 8) and of the functional housing (13), respectively.

9. Decoupling device according to one or more of Claims 2 to 7, **characterized in that** there is at least one column (41) in which the seating shoulders (24, 25, 26) are formed by a recess (23) at an end face of the column (41).

10. Decoupling device according to Claim 8 or 9, **characterized in that** the decoupling housing (6, 7, 8) or the functional housing (13) and the holding element (19) have axial and radial seating shoulders (24.1, 24.2) and at least the axial seating shoulders (24.1) are constructed to be circular, wherein the curvature of the circular seating shoulders (24, 25, 26) corresponds to the curvature of the decoupling elements (14, 15) at a maximum.

11. Decoupling device according to one or more of the previous claims, **characterized in that** the decoupling device (1) has a longitudinal axis (3) and the seating shoulders (24, 25, 26) for the decoupling elements (14, 15) are arranged with respect to one another in such a manner that an axis of rotation (27) of the decoupling elements (14, 15) extends obliquely to the longitudinal axis (3).

12. Decoupling device according to one or more of the previous claims, 1 **characterized in that** the decoupling elements (14, 15) are constructed as roll bodies.

13. Decoupling device according to Claim 12, **characterized in that** the roll bodies are constructed in the form of spheres.

14. Decoupling device according to one or more of the previous claims, **characterized in that** an angle α between decoupling elements (14, 15) adjacent in the circumferential direction is in each case of the same size.

15. Decoupling device according to one or more of the previous claims, **characterized in that** the decoupling elements (14, 15) are above one another on a line (18) extending in parallel to the longitudinal axis (3).

## Revendications

1. Dispositif de découplage (1) pour un actionneur (2), notamment un moteur électrique (2), comportant
- un boîtier de découplage (6, 7, 8) en une ou plusieurs parties, relié à un boîtier fonctionnel (13) et entourant au moins en partie l'actionneur (2), et
- des éléments de découplage (14, 15) en matière élastique,
chaque élément de découplage (14, 15) s'appliquant contre des épaulements d'appui (24, 25, 26),
un premier ensemble (14) d'éléments de couplage (14) séparés les uns des autres se trouvant dans un premier plan perpendiculaire à l'axe longitudinal (3) du dispositif de découplage.
ainsi qu'un élément de fixation (19) sur lequel agit l'actionneur (2),
**caractérisé en ce que**
l'élément de fixation (19) étant situé entre le premier ensemble (14) d'éléments de découplage (14) séparés les uns des autres et un autre ensemble d'éléments de couplage (15) séparés les uns des autres et
cet autre ensemble d'éléments de découplage (15) séparés les uns des autres se trouvant dans un second plan parallèle au premier plan.

2. Dispositif de découplage selon la revendication 1,
**caractérisé en ce que**
le boîtier de découplage (6, 7, 8) ou le boîtier fonctionnel (13) forment au moins deux épaulements d'appui (24, 25, 26) pour un élément de découplage (14, 15).

3. Dispositif de découplage selon la revendication 2,
**caractérisé en ce que**
l'élément de fixation (19) forme deux épaulements d'appui (24, 25, 26) pour un élément de découplage (14, 15).

4. Dispositif de découplage selon la revendication 2 ou 3,
**caractérisé en ce que**
les éléments de découplage (14, 15) sont installés par paires.

5. Dispositif de découplage selon les revendications 2, 3 ou 4,
**caractérisé en ce que**
l'élément de fixation (19) comporte une partie en saillie (35) radiale partiellement ou totalement périphérique, et
l'élément de fixation (19) comporte au moins une fente (36) dans sa partie en saillie radiale (35) au niveau des éléments de découplage (14, 15).

6. Dispositif de découplage selon la revendication 5,
**caractérisé en ce qu'**
un élément de découplage (14) du premier ensemble d'éléments de découplage est relié par une entretoise (20) à un élément de découplage (15) du second ensemble d'éléments de découplage.

7. Dispositif de découplage selon l'une des revendications 2 à 4,
**caractérisé en ce que**
l'élément de fixation (19) comporte une partie en saillie radiale (35) partiellement ou totalement périphérique et l'élément de fixation (19) comporte au moins un évidement (45) dans sa partie radialement en saillie (35) au niveau des éléments de découplage (14, 15).

8. Dispositif de découplage selon une ou plusieurs des revendications 2 à 7,
**caractérisé en ce que**
dans le boîtier de découplage (6, 7, 8) ou dans le boîtier fonctionnel (13), les épaulements d'appui (24, 25, 26) sont formés par au moins une cavité (23) dans une zone extérieure du boîtier de découplage (6, 7, 8) ou du boîtier fonctionnel (13).

9. Dispositif de découplage selon une ou plusieurs des revendications 2 à 7,
**caractérisé par**
au moins une colonne (41) dans laquelle sont formés les épaulements d'appui (24, 215, 26) par une cavité (23) d'une face frontale de la colonne (41).

10. Dispositif de découplage selon les revendications 8 ou 9,
**caractérisé en ce que**
le boîtier de découplage (6, 7, 8) ou le boîtier fonctionnel (13) et l'élément de fixation (19) ont des épaulements d'appui axiaux et radiaux (24.1, 24.2) et au moins les épaulements d'appui axiaux (24.1) sont en forme d'arcs de cercle, la courbure des épaulements d'appui (24, 25, 26) en forme d'arc de cercle correspondant au plus à la courbure des éléments de découplage (14, 15).

11. Dispositif de découplage selon l'une ou plusieurs des revendications précédentes,
**caractérisé en ce que**
le dispositif de découplage (1) a un axe longitudinal (3) et les épaulements d'appui (24, 25, 26) sont réalisés les uns par rapport aux autres pour les éléments de découplage (14, 15) de façon qu'un axe de rotation (27) des éléments de découplage (14, 15) soit incliné par rapport à l'axe longitudinal (3).

12. Dispositif de découplage selon l'une ou plusieurs des revendications précédentes,
**caractérisé en ce que**
les éléments de découplage (14, 15) sont des organes de roulement.

13. Dispositif de découplage selon la revendication 12,
**caractérisé en ce que**
les organes de roulement sont en forme de billes.

14. Dispositif de découplage selon l'une ou plusieurs des revendications précédentes,
**caractérisé en ce qu'**
un angle α entre les éléments de découplage (14, 15) voisins dans la direction périphérique est chaque fois le même.

15. Dispositif de découplage selon une ou plusieurs des revendications précédentes,
**caractérisé en ce que**
les éléments de découplage (14, 15) sont superposés sur une ligne (18) parallèle à l'axe longitudinal (3).
